# FASCICULE DE BREVET EUROPEEN

(11) **EP 2 627 476 B1**
(45) Date de publication et mention de la délivrance du brevet: **12.11.2014**
(21) Numéro de dépôt: 11758498.7
(22) Date de dépôt: 05.09.2011
(51) Int. Cl.: B24B 9/14, B24B 47/22, B24B 13/005

(54) **GABARIT D'ETALONNAGE D'UNE MACHINE D'USINAGE D'UNE LENTILLE OPHTALMIQUE, DISPOSITIF ET PROCEDE UTILISANT UN TEL GABARIT**
SCHABLONE ZUM KALIBRIEREN EINER MASCHINE ZUR BEARBEITUNG EINER OPHTHALMISCHEN LINSE, VORRICHTUNG UND VERFAHREN MIT EINER DERARTIGEN SCHABLONE
TEMPLATE FOR CALIBRATING A MACHINE USED TO MACHINE AN OPHTHALMIC LENS, DEVICE AND METHOD USING SUCH A TEMPLATE

(30) Priorité: 15.10.2010 FR 1004064
(43) Date de publication de la demande: 21.08.2013
(73) Titulaire: Essilor International (Compagnie Générale d'Optique), 94220 Charenton-le-Pont (FR)
(72) Inventeur: NAUCHE, Michel, F-94220 Charenton Le Pont (FR); GEYSELS, Laurent, F-94220 Charenton Le Pont (FR)
(74) Mandataire: Chauvin, Vincent
(86) Numéro de dépôt international: PCT/FR2011/000489
(87) Numéro de publication internationale: WO 2012/049377

(56) Documents cités:
- EP-A1- 0 744 246
- US-A- 4 656 754
- US-A- 6 071 176

## Description

La présente invention concerne de manière générale l'étalonnage des dispositifs d'usinage de lentilles ophtalmiques, auquel il faut procéder régulièrement pour disposer d'une référence précise de chacun de ses paramètres.

Elle concerne plus particulièrement un gabarit d'étalonnage pour étalonner un dispositif d'usinage équipé de moyens de blocage et de moyens d'usinage d'une lentille ophtalmique, comportant une partie de fixation adaptée à être fixée auxdits moyens de blocage et une partie d'étalonnage ménagée autour de ladite partie de fixation.

Elle concerne également un dispositif d'usinage susceptible d'être étalonné à l'aide d'un tel gabarit d'étalonnage.

Elle concerne aussi un procédé d'étalonnage de la position d'un outil de ce dispositif d'usinage à l'aide d'un gabarit d'étalonnage tel que précité.

### ARRIERE-PLAN TECHNOLOGIQUE

On connaît du document EP 0 744 246 un gabarit d'étalonnage tel que précité, qui est destiné à être monté en lieu et place d'une lentille ophtalmique sur un dispositif d'usinage équipé, d'une part, de deux bras de blocage d'une lentille ophtalmique, et d'autre part, d'une meule présentant une gorge de biseautage.

Ce gabarit d'étalonnage se présente sous la forme générale d'un disque dont la tranche présente un renfoncement en creux qui délimite deux pointes anguleuses.

A l'étalonnage, lorsque le gabarit d'étalonnage est bloqué entre les deux bras de blocage du dispositif d'usinage, il est tiré parti de ces pointes anguleuses pour connaître la position radiale et la position angulaire de l'axe des bras de blocage par rapport à l'axe de la meule.

La tranche du gabarit d'étalonnage présente par ailleurs, sur sa partie circulaire, une zone de section transversale en forme de biseau.

A l'étalonnage, il est alors tiré parti de ce biseau pour connaître la position axiale de la gorge de biseautage de la meule par rapport à l'axe des bras de blocage.

Si un tel gabarit d'étalonnage s'avère parfaitement efficace pour étalonner la position de la meule par rapport aux bras de blocage, il s'avère en revanche inadapté pour étalonner les positions d'autres outils que le dispositif d'usinage pourrait comporter. Il s'avère notamment inadapté pour étalonner les positions d'une perceuse, d'une meule de rainage ou encore d'une meule de chanfreinage équipant le dispositif d'usinage.

Pour réaliser cet étalonnage, l'utilisateur du dispositif d'usinage est alors contraint de faire appel à des techniciens compétents.

Afin de procéder à l'étalonnage, de tels techniciens utilisent généralement une vingtaine de lentilles ophtalmiques pour réaliser des tests longs, fastidieux et délicats, qui permettent à terme d'étalonner par tâtonnement les positions des perceuse, meule de rainage et meule de chanfreinage du dispositif d'usinage.

### OBJET DE L'INVENTION

Afin de remédier aux inconvénients précités de l'état de la technique, la présente invention propose un nouveau gabarit d'étalonnage permettant la mise en oeuvre d'une méthode rapide et simple d'étalonnage des positions de tous les outils du dispositif d'usinage.

Plus particulièrement, on propose selon l'invention un gabarit d'étalonnage tel que défini dans la revendication 1.

Ainsi, grâce à l'invention, le gabarit d'étalonnage peut être utilisé non seulement en étant mis au contact des outils du dispositif d'usinage, comme cela était déjà le cas avec le gabarit décrit dans le document EP 0 744 246, mais aussi en étant usiné par ces mêmes outils.

Le gabarit d'étalonnage peut en particulier être usiné par un même outil et suivant une même consigne de pilotage sur chacun de ses motifs de forme, seule la valeur d'un paramètre à étalonner variant d'un usinage à l'autre. De cette manière, le gabarit d'étalonnage permet ensuite à l'usager de comparer le résultat de ces différents usinages et d'en déduire quelle valeur est la plus adaptée pour ce paramètre à étalonner.

L'identifiant visuel, qui est associé au motif de forme où l'usinage réalisé est optimal, permet ensuite de saisir de façon pratique la valeur du paramètre à étalonner dans l'unité informatique de pilotage du dispositif d'usinage.

D'autres caractéristiques avantageuses et non limitatives du gabarit d'étalonnage conforme à l'invention sont définies dans les revendications 2 à 9.

Avantageusement aussi :
- le gabarit d'étalonnage est réalisé d'une seule pièce par moulage et lesdits identifiants visuels et motifs de forme sont formés en relief sur ladite partie d'étalonnage ;
- ladite partie d'étalonnage présente une tranche qui comprend une portion circulaire autour de la partie de fixation et au moins un renfoncement local par rapport à ladite portion circulaire, pour délimiter deux pointes anguleuses ;
- ladite partie d'étalonnage présente une tranche qui comprend une portion circulaire autour de la partie de fixation, de section transversale en forme de biseau ;
- ladite partie d'étalonnage présente des faces avant et arrière sensiblement planes et comporte deux bossages chacun en saillie sur l'une de ses faces avant et arrière, ces deux bossages présentant chacun un fond plat sensiblement parallèle auxdites faces avant et arrière et se raccordant entre eux par une paroi de liaison en partie plane et inclinée par rapport aux fonds plats.

L'invention concerne également un dispositif d'usinage tel que défini dans la revendication 10.

L'invention concerne aussi un procédé d'étalonnage tel que défini dans la revendication 11

D'autres caractéristiques avantageuses et non limitatives du procédé d'étalonnage conforme à l'invention sont définies dans les revendications 12 à 17.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective d'un dispositif d'usinage conforme à l'invention ;
- la figure 2 est une vue schématique en perspective d'un gabarit d'étalonnage conforme à l'invention ;
- la figure 3 est une vue schématique en perspective du gabarit d'étalonnage de la figure 2 après qu'il a servi à l'étalonnage de la perceuse du dispositif d'usinage de la figure 1 ;
- la figure 4 est une vue schématique en perspective du gabarit d'étalonnage de la figure 2 après qu'il a servi à l'étalonnage d'une première partie de la meule de chanfreinage du dispositif d'usinage de la figure 1 ;
- la figure 5 est une vue schématique en perspective du gabarit d'étalonnage de la figure 2 après qu'il a servi à l'étalonnage d'une seconde partie de la meule de chanfreinage du dispositif d'usinage de la figure 1 ;
- la figure 6 est une vue schématique en perspective du gabarit d'étalonnage de la figure 2 après qu'il a servi à l'étalonnage d'une première mobilité de la meule de rainage du dispositif d'usinage de la figure 1 ;
- la figure 7 est une vue schématique en perspective du gabarit d'étalonnage de la figure 2 après qu'il a servi à l'étalonnage d'une seconde mobilité de la meule de rainage du dispositif d'usinage de la figure 1 ;
- la figure 8 est une vue schématique en perspective du gabarit d'étalonnage de la figure 2 après qu'il a servi à un contrôle final de l'étalonnage du dispositif d'usinage de la figure 1 ; et
- la figure 9 est une vue schématique en perspective du gabarit d'étalonnage de la figure 2 après que les valeurs des paramètres d'étalonnage du dispositif d'usinage de la figure 1 y ont été inscrites.

### Dispositif d'usinage

Pour l'usinage d'une lentille ophtalmique 100, on peut disposer d'un dispositif d'usinage réalisé sous la forme de toute machine de découpage ou d'enlèvement de matière apte à modifier le contour de cette lentille ophtalmique en vue d'adapter sa forme à celle de l'entourage d'une monture de lunettes.

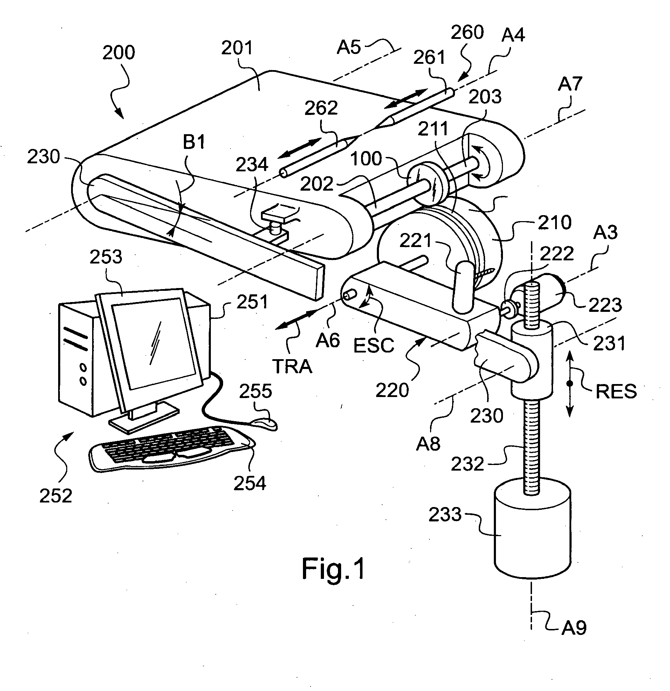

Dans l'exemple schématisé sur la figure 1, le dispositif d'usinage est constitué, de manière connue en soi, par une meuleuse 200 automatique, communément dite numérique. Cette meuleuse 200 comporte en l'espèce :
- une bascule 201 qui est montée librement pivotante autour d'un axe de référence A5, en pratique un axe horizontal, sur un châssis non représenté, et qui supporte la lentille ophtalmique 100 à usiner ;
- un train de meules 210, 211, qui est calé en rotation sur un axe de meule A6 parallèle à l'axe de référence A5, et qui est lui aussi dûment entraînée en rotation par un moteur non représenté ;
- un module de finition 220 qui est monté à rotation autour de l'axe de meule A6, et qui embarque des outils de finition de la lentille ophtalmique 100, à savoir ici une meule de rainage 221, une meule de chanfreinage 223 et des moyens de perçage 221 de la lentille ophtalmique 20 ; et
- un ensemble de palpage 260 de la lentille ophtalmique 100, qui comporte en l'espèce deux tiges 261, 262 de palpage alignées l'une avec l'autre suivant un axe de palpage A4 et montées à translation suivant cet axe de palpage A4 pour palper les faces avant et arrière de la lentille ophtalmique 100.

La bascule 201 est équipée d'un support de blocage de lentille, ici formé par deux arbres 202, 203 de serrage et d'entraînement en rotation de la lentille ophtalmique 100 à usiner.

Ces deux arbres 202, 203 sont alignés l'un avec l'autre suivant un axe de blocage A7 parallèle à l'axe A5. Chacun des arbres 202, 203 possède une extrémité libre qui fait face à l'autre. L'extrémité libre de l'un des arbres 202 est équipée d'un nez de blocage de la lentille ophtalmique 100, tandis que celle de l'autre des arbres 203 possède une cavité d'accueil d'un gland de blocage préalablement fixé à la lentille ophtalmique 100.

Le premier des deux arbres 202 est fixe en translation suivant l'axe de blocage A7. Le second des deux arbres 203 est au contraire mobile en translation suivant l'axe de blocage A7 pour réaliser le serrage en compression axiale de la lentille ophtalmique 100 entre les deux nez de blocage.

Tel que représenté schématiquement sur la figure 1, le train de meules 210, 211 comporte plusieurs meules montées coaxialement sur l'axe de meule A6, chaque meule étant utilisée pour une opération d'usinage spécifique de la lentille ophtalmique 100 à usiner.

Ce train de meules comporte en particulier une meule d'ébauche 210 cylindrique de révolution autour de l'axe de meule A6, qui présente un diamètre de 155 millimètres, et une meule de biseautage 211 sensiblement identique mais qui présente à mi-longueur une gorge de biseautage de section transversale triangulaire.

La meule d'ébauche 210 est ainsi un outil d'ébauche permettant d'usiner grossièrement la lentille ophtalmique. La meule de biseautage 211 est quant à elle un outil de finition permettant d'usiner la tranche de la lentille ophtalmique 100 de manière à ce qu'elle présente un profil transversal en forme de biseau, adapté à s'emboîter dans une rainure de l'entourage de la monture de lunettes.

Le train de meules pourrait bien sûr comporter d'autres meules, telles que des meules de polissage.

Le train de meules 210 est porté par un chariot, non représenté, monté mobile en translation suivant l'axe de meule A6. Le mouvement de translation du chariot porte-meules est appelé « transfert » TRA.

On comprend qu'il s'agit ici de réaliser un mouvement relatif des meules par rapport à la lentille et que l'on pourra prévoir, en variante, une mobilité axiale de la lentille, les meules restant fixes.

La meuleuse 200 comporte, en outre, une biellette 230 dont une extrémité est articulée par rapport au châssis pour pivoter autour de l'axe de référence A5, et dont l'autre extrémité est articulée par rapport à une noix 231 pour pivoter autour d'un axe A8 parallèle à l'axe de référence A5.

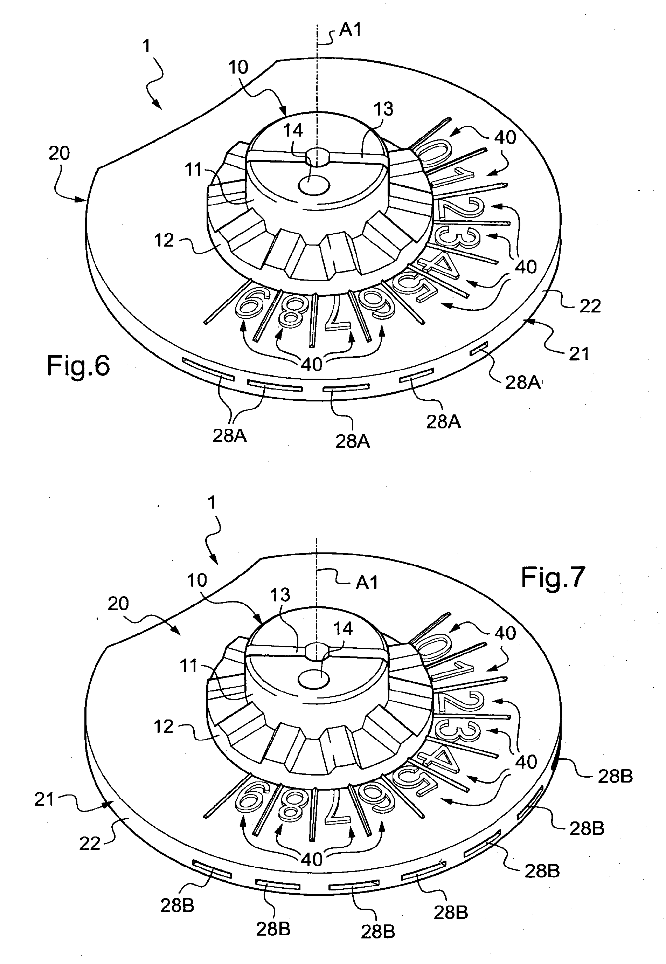

La noix 231 est elle-même montée mobile en translation suivant un axe de restitution A9 perpendiculaire à l'axe de référence A5. Telle que schématisée sur la figure 6, la noix 231 est une noix taraudée en prise à vissage avec une tige filetée 232 qui, alignée suivant l'axe de restitution A9, est entraînée en rotation par un moteur 233.

La biellette 230 comporte par ailleurs un capteur de contact 234, par exemple constitué par une cellule à effet Hall, qui interagit avec un élément correspondant de la bascule 201. On a noté B1 l'angle de pivotement de la biellette 230 autour de l'axe de référence A5 par rapport à l'horizontale. Cet angle B1 est linéairement associé à la translation verticale, notée RES (pour « restitution »), de la noix 231 suivant l'axe de restitution A9.

Le module de finition 220 présente une mobilité de pivotement autour de l'axe de meule A6, appelée mobilité d'escamotage ESC. Concrètement, le module de finition 220 est pourvu d'une roue dentée (non représentée) qui engrène avec un pignon équipant l'arbre d'un moteur électrique solidaire du chariot porte-meules. Cette mobilité lui permet de rapprocher ou d'éloigner ses outils de finition 221, 222, 223 de la lentille ophtalmique 100.

Parmi ces outils de finition, la meule de rainage 222 et la meule de chanfreinage 223 sont montées sur un arbre rotatif du module de finition 220, d'axe de rotation A3 parallèle à l'axe de référence A5. Un moteur, embarqué à l'intérieur du module de finition 220, permet d'entraîner ces deux outils de finition 222, 223 en rotation pour meuler la lentille ophtalmique 100.

La meule de rainage 222 présente ici une forme de disque d'axe de révolution confondu avec l'axe de rotation A3. Elle présente une épaisseur réduite, de l'ordre du millimètre, pour permettre de réaliser des rainures de largueurs réduites sur la tranche de la lentille ophtalmique 100.

La meule de chanfreinage 223 présente quant à elle une partie centrale cylindrique et deux parties d'extrémité coniques, d'axes de révolution confondus avec l'axe de rotation A3. Ses deux parties d'extrémité coniques permettent de chanfreiner les arêtes avant et arrière de la tranche de la lentille ophtalmique 100.

La perceuse 221 comporte ici un support monté fixe sur le module de finition 220, et un foret monté rotatif sur le support autour d'un axe parallèle à l'axe de référence A5. Cette perceuse 221 permet ainsi de réaliser des trous de perçage dans la lentille ophtalmique 100 enserrée entre les deux arbres 202, 203.

Les deux tiges 261, 262 de palpage de la lentille ophtalmique 100 présentent quant à elles des formes cylindriques de révolution autour de l'axe de palpage A4, à l'exception de leurs extrémités en vis-à-vis qui sont pointues pour palper un point précis de chaque face de la lentille ophtalmique 100. Ces deux tiges 261, 262 sont actionnées en translation suivant l'axe de palpage A4 par un moteur non représenté, pour pouvoir s'écarter des faces correspondantes de la lentille ou pour être rappelées au contact de ces faces afin de déterminer les coordonnées tridimensionnelles des points à palper.

La meuleuse 200 comporte enfin une unité de pilotage 251 de ses différentes mobilités, qui est de type électronique et/ou informatique et qui permet en particulier de piloter :
- le moteur d'entraînement en translation du deuxième arbre 203 ;
- le moteur d'entraînement en rotation des deux arbres 202, 203 ;
- le moteur d'entraînement en translation du chariot porte-meules suivant la mobilité de transfert TRA ;
- le moteur 233 d'entraînement en translation de la noix 231 suivant la mobilité de restitution RES ;
- le moteur d'entraînement en rotation du module de finition 220 suivant la mobilité d'escamotage ESC ;
- le moteur d'entraînement en rotation des meules de rainage 222 et de chanfreinage 223 ;
- le moteur d'entraînement en rotation du foret de la perceuse 221 ; et
- le moteur d'entraînement en translation des deux tiges 261, 262 de palpage.

Telle que représentée sur la figure 1, l'unité de pilotage est implémentée sur un ordinateur de bureau raccordé à la meuleuse 200. Bien sûr, en variante, la partie logicielle de la meuleuse pourrait être implémentée directement sur un circuit électronique de la meuleuse. Elle pourrait également être implémentée sur un ordinateur distant, communiquant avec la meuleuse par un réseau privé ou public, par exemple en utilisant un protocole de communication par IP (internet).

La meuleuse 200 comporte enfin une interface Homme-Machine 252 qui comprend ici un écran d'affichage 253, un clavier 254 et une souris 255 adaptés à communiquer avec l'unité de pilotage 251. Cette interface IHM 252 permet à l'utilisateur de saisir des valeurs numériques sur l'écran d'affichage 253 pour piloter en conséquence la meuleuse 200.

Il va de soi que, pour une bonne exécution des opérations de détourage et de finition de la lentille ophtalmique 100, il convient que les différents axes en cause soient bien repérés les uns par rapport aux autres.

Plus précisément, l'axe de référence A5 et l'axe de meule A6 étant des axes fixes sur le châssis de la meuleuse 200, il convient que, dans le repère de rotation de l'ensemble, la position angulaire de l'axe de référence A5 par rapport à l'axe de meule A6, définie par l'angle B1, puisse être dûment repérée.

De même, il convient que la position angulaire des arbres 202, 203 autour de l'axe de blocage A7 puisse être dûment repérée.

Il convient également que la position axiale du train de meules 210, 211 suivant l'axe de meule A6 puisse être dûment repérée.

Il en est de même du diamètre des meules 210, 211 du train de meules, qu'il s'agisse de leur diamètre hors tout ou qu'il s'agisse de leur diamètre au fond de sa gorge de biseautage.

S'agissant de la perceuse 221, il convient de repérer la position de l'extrémité de son foret, pour percer la lentille en un point précis et selon une profondeur précise.

Il convient aussi de repérer les positions de la tranche de la meule de rainage 222 (dont le diamètre se réduit à chaque usinage) et des extrémités coniques de la meule de chanfreinage 223 (dont la forme se modifie à chaque usinage).

### Gabarit d'étalonnage

Pour ces divers repérages, il est nécessaire de procéder à un étalonnage de la meuleuse 200 à sa mise en route, et il est nécessaire de renouveler périodiquement cet étalonnage, notamment à chaque changement ou avivage des meules 210, 211 et des outils de finition 221, 222, 223.

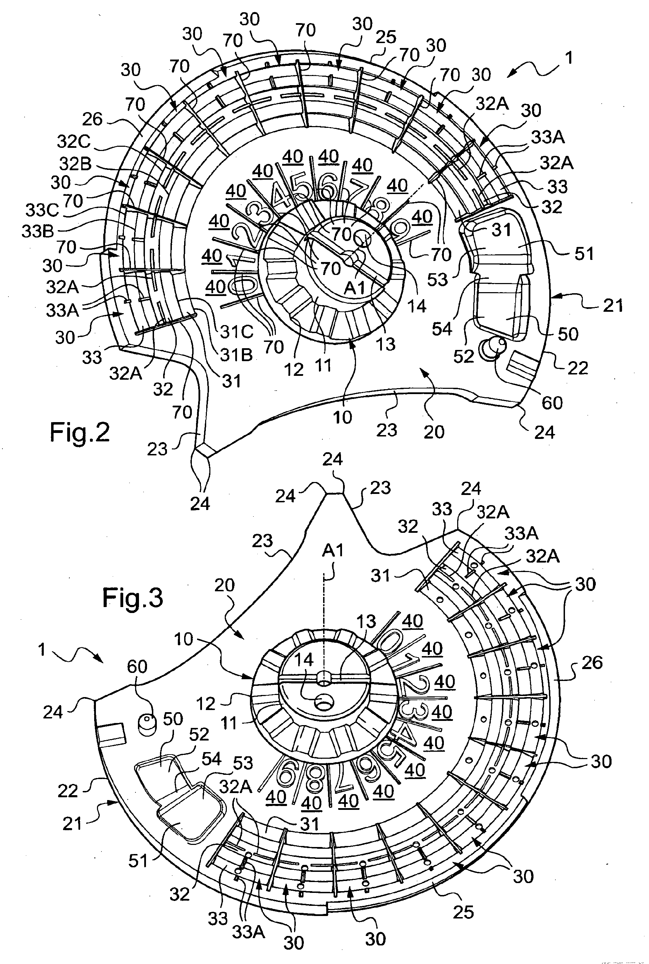

Le gabarit d'étalonnage 1 représenté sur les figures 2 à 9 a notamment pour but de faciliter cet étalonnage.

Tel que représenté sur la figure 2, ce gabarit d'étalonnage 1, qui est destiné à être monté sur la meuleuse 200 à étalonner en lieu et place de la lentille ophtalmique 100, se présente sous la forme générale d'un disque 20 (la « partie d'étalonnage ») d'axe principal A1 avec, en saillie dans sa zone centrale, un plot 10 (la « partie de fixation ») propre à permettre son montage dans la cavité d'accueil du deuxième arbre 203 de la meuleuse 200.

Le plot 10 comporte en l'espèce un manchon 11 cylindrique de révolution autour de l'axe principal A1, et une couronne crénelée 12 qui borde ce manchon 11. Grâce à ces manchon 11 et couronne crénelée 12, le gabarit d'étalonnage 1 est adapté à être bloqué sur le second arbre 203 de la meuleuse, puis à être rigidement fixé entre les deux arbres 202, 203 de la meuleuse 200.

L'extrémité circulaire du manchon 11 présente une rainure 13 qui s'étend suivant un de ses diamètres, et un trou 14. Grâce à ces rainure 13 et trou 14, les positions angulaire et axiale du gabarit d'étalonnage 1 sur les arbres 202, 203 de la meuleuse 200 peuvent être parfaitement repérées.

La tranche 21 de ce gabarit d'étalonnage 1 est circulaire sur une partie de son périmètre, et comporte deux renfoncements 23 en creux par rapport à ce cercle. Chaque renfoncement 23 délimite à ses deux extrémités deux pointes anguleuses 24.

Un premier de ces renfoncements 23, le plus petit des deux, présente une forme de dièdre en creux. Ses deux pointes anguleuses 24 sont peu écartées l'une de l'autre, ce qui permet de les mettre en contact contre une meule de petit diamètre, telle que la meule de chanfreinage 223.

Le second renfoncement 23 présente une forme circulaire en creux. Ses deux pointes anguleuses 24 sont écartées l'une de l'autre d'une distance plus importante, ce qui permet de les mettre en contact contre une meule de grand diamètre, telle que la meule de biseautage 211. Dans la forme de réalisation représentée, les deux pointes anguleuses 23 de ce second renfoncement 23 sont écartées l'une de l'autre de 90 degrés autour de l'axe principal A1.

La partie restante 22 de la tranche 21 du gabarit d'étalonnage 1 est quant à elle circulaire.

Sur deux portions 25, 26 adjacentes de cette partie circulaire 22, la tranche 21 du gabarit d'étalonnage 1 présente un profil en forme de biseau. Chaque portion 25, 26 s'étend autour de l'axe principal A1 suivant un angle sensiblement égal à 60 degrés. Les biseaux formés sur ces deux portions 25, 26 présentent des angles au sommet distincts, l'un égal à 90 degrés et l'autre égal à 120 degrés.

Le reste de la partie circulaire 22 de la tranche 21 du gabarit d'étalonnage 1 est quant à elle lisse et cylindrique de révolution autour de l'axe principal A1.

Le gabarit d'étalonnage 1 comporte par ailleurs deux bossages creux 50, 51 qui s'étendent globalement en arc de cercle autour de l'axe principal A1, et qui font chacun respectivement saillie sur ses deux faces.

Les fonds 52, 53 de ces bossages creux 50, 51 sont plats et s'étendent parallèlement aux faces du gabarit d'étalonnage 1. Ils se raccordent l'un à l'autre en continu par une paroi de liaison 54 qui est également sensiblement plane et qui s'étend globalement en biais par rapport au gabarit d'étalonnage 1, en faisant avec celles-ci un angle de l'ordre de 45 degrés.

Le gabarit d'étalonnage 1 présente par ailleurs deux ergots 60 en saillie sur ses deux faces, qui s'étendent au droit l'un de l'autre, sensiblement perpendiculairement à ces faces.

Le gabarit d'étalonnage 1 présente par ailleurs, sur sa face avant, d'une part, une pluralité de motifs de forme 30, et, d'autre part, une pluralité d'identifiants visuels 40 chacun visuellement associé à l'un de ces motifs de forme 30.

Les motifs de forme 30 sont des figures géométriques au niveau desquelles le gabarit d'étalonnage 1 est destiné à être usiné pour, comme cela sera décrit en détail dans la suite de cet exposé, permettre d'étalonner les outils de finition de la meuleuse 200.

Les identifiants visuels 40 sont quant à eux des symboles qui permettent à l'usager de repérer chaque motif de forme 30 et qui sont susceptibles d'être saisis par l'usager sur l'interface Homme-Machine 252 en vue de sélectionner un motif de forme 30 préféré.

Comme le montre la figure 2, l'association entre les motifs de forme 30 et les identifiants visuels 40 est réalisée en disposant chaque motif de forme 30 et chaque identifiant visuel 40 associé dans une zone commune et exclusive de la face avant du gabarit d'étalonnage 1.

Pour cela, la moitié de la face avant du gabarit d'étalonnage 1, celle située à l'opposé des renfoncements 23, est ici divisée en dix secteurs angulaires équivalents et adjacents, séparés deux à deux par des lignes de séparation 70 partiellement interrompues.

Il est alors prévu dix motifs de forme 30 et dix identifiants visuels 40 respectivement situés dans ces dix secteurs angulaires.

Ici, chaque identifiant visuel 40 est formé par un chiffre noté de 0 à 9. Ces chiffres sont répartis le long du bord du plot 10 et sont clairement séparés deux à deux par les lignes de séparation 70.

En variante, on pourrait prévoir que ces identifiants visuels soient formés autrement, par exemple par des lettres distinctes (de A à J) ou par des figures géométriques distinctes (carré, rond, étoile, losange, ...).

Les motifs de forme 30 présentent quant à eux des formes et des tailles toutes identiques, et sont répartis à intervalles réguliers autour de l'axe principal A1.

Chaque motif de forme 30 est ici composé de trois marques de centrage 31, 32, 33 distinctes. Comme cela sera décrit plus en détail dans la suite de l'exposé, ces marques de centrage 31, 32, 33 sont des zones délimitées destinées à être usinées une seule fois pour permettre d'étalonner une unique mobilité d'un unique outil de finition de la meuleuse 200.

Les trois marques de centrage 31, 32, 33 de chaque motif de forme 30 sont ici délimitées, d'une part, par les deux lignes de séparation 70 du secteur angulaire correspondant, et, d'autre part, par des arcs de cercle de séparation 31B, 31C, 32B, 32C, 33B, 33C qui sont centrés sur l'axe principal A1 et qui s'étendent d'une ligne de séparation 70 à l'autre.

Une première marque de centrage 31, située du côté intérieur du gabarit d'étalonnage 1, est laissée vierge de traits ou de figures géométriques.

Une seconde marque de centrage 33, située du côté extérieur du gabarit d'étalonnage 1, comporte une première mire 33A. Cette première mire 33A est en l'espèce formée d'un trait d'axe radial par rapport à l'axe principal A1, qui s'étend à égale distance des deux lignes de séparation 70 du secteur angulaire correspondant, et qui est interrompu en son centre.

Une troisième marque de centrage 32, située entre les deux marques de centrage 31, 33 précitées, comporte une seconde mire 32A. Cette seconde mire 32A est en l'espèce formée d'un arc de cercle qui est centré sur l'axe principal A1, qui s'étend depuis l'une jusqu'à l'autre des deux lignes de séparation 70 du secteur angulaire correspondant, à égale distance des deux arcs de cercles de séparation 32B, 32C correspondant, et qui est interrompu en son centre.

Avantageusement, le gabarit d'étalonnage 1 est réalisé par moulage d'une seule pièce dans un matériau qui, dans des conditions normales de températures et de pressions, est adapté à être usiné par les outils de finition 221, 222, 223 de la meuleuse 200.

Le matériau est ici plus particulièrement choisi pour présenter, dans ces conditions normales de températures et de pressions, un module d'Young compris entre 1900 et 2500 Mpa.

Typiquement, ce gabarit d'étalonnage 1 pourra préférentiellement être réalisé dans un matériau connu et utilisé pour fabriquer des lentilles ophtalmiques. Il est plus précisément ici réalisé en polycarbonate.

Ici, ses identifiants visuels 40 et motifs de forme 30 sont formés en relief sur sa face avant, lors de sa fabrication par moulage, au profit de son faible coût de revient.

Bien sûr, en variante, ces identifiants visuels 40 et motifs de forme 30 pourraient être formés autrement. Ils pourraient par exemple être imprimés sur le gabarit d'étalonnage. Ils pourraient également se présenter sous la forme d'un autocollant à coller sur le gabarit d'étalonnage.

### Procédé d'étalonnage

Pour la mise en oeuvre du gabarit d'étalonnage 1 sur la meuleuse 200, il est procédé à un certain nombre d'opérations, qui, préférentiellement, sont exécutées dans l'ordre suivant.

Le gabarit d'étalonnage 1 est tout d'abord mis en place entre les deux arbres 202, 203 de la meuleuse 200, en veillant à ce que sa rainure 13 et son trou 14 s'engagent dans des nervure et ergot prévus en correspondance sur le second arbre 203 de la meuleuse 200, ce qui permet un repérage précis des positions angulaire et axiale du gabarit d'étalonnage 1 par rapport à l'axe de blocage A7.

L'unité de pilotage 251 commande ensuite l'abaissement de la bascule 201, sous le contrôle de la noix 231, jusqu'à ce que le gabarit d'étalonnage 1 vienne porter sur la meule d'ébauche 210 par l'une de ses pointes anguleuses 24. Le contact correspondant est alors détecté par le capteur de contact 234 dès que, poursuivant son mouvement sous l'entraînement de la noix 231, la biellette 230 s'écarte de la bascule 201.

Il est ensuite procédé à une incrémentation de la position angulaire du gabarit d'étalonnage 1 autour de l'axe de blocage A7, en faisant pivoter les arbres 202, 203, jusqu'à ce qu'il vienne porter par son autre pointe anguleuse 24 sur la meule d'ébauche 210. Comme précédemment, le capteur de contact 234 détecte le contact correspondant.

La valeur de l'angle B1 est alors mise en mémoire comme référence pour l'établissement des tableaux de consigne d'abaissement de la bascule 201 lors de l'usinage de lentilles ophtalmiques 100.

Le gabarit d'étalonnage 1 est ensuite appliqué sur la meule de biseautage 211 par son biseau 25. La meule de biseautage 211 est alors déplacée axialement suivant l'axe de meule A6, ce qui permet de relever la position axiale de sa gorge de biseautage par rapport aux arbres 202, 203.

Cette valeur de position axiale est alors également mise en mémoire comme référence pour l'établissement de tableaux de consigne.

Le gabarit d'étalonnage 1 est ensuite appliqué sur la meule de biseautage 211 par son biseau 26, de telle sorte que ce dernier vienne au contact du fond de la gorge de biseautage afin de relever le diamètre de la meule de biseautage 211 en fond de gorge.

Cette valeur est elle aussi mise en mémoire comme référence pour l'établissement de tableaux de consigne.

Les différentes valeurs relevées permettent ainsi d'étalonner efficacement la position des meules d'ébauche 210 et de biseautage 211 par rapport aux arbres 202, 203.

Il est ensuite procédé à l'étalonnage de la position des tiges 261, 262 de palpage par rapport aux arbres 202, 203.

Les tiges 261, 262 sont à cet effet amenées en butée arrière puis en butée l'une contre l'autre pour que les origines de leurs repères locaux respectifs soient bien définies.

Elles sont ensuite déplacées de manière à venir porter sur les extrémités des ergots 60 pour contrôler leurs positions par rapport aux arbres 202, 203 de la meuleuse 200.

Afin de contrôler leur linéarité, elles sont après déplacées de manière à venir porter de part et d'autre du fond 52 d'un bossage creux 50 puis à glisser vers le fond 53 de l'autre bossage creux 51, en passant par la paroi de liaison 54.

Leurs déplacements respectifs sont dûment relevés, ce qui permet alors de déterminer les paramètres de linéarité de chacune des deux tiges 261, 262.

Il est ensuite procédé à l'étalonnage de la position de la perceuse 221 relativement aux arbres 202, 203 (voir figure 3).

La perceuse 221 est alors considérée comme possédant trois mobilités ρ, θ, z par rapport à ces arbres 202, 203.

La première mobilité p est en l'espèce constituée par l'aptitude du module de finition 220 à pivoter autour de l'axe de meule A6, pour rapprocher radialement le foret de la perceuse 221 du gabarit d'étalonnage 1.

La seconde mobilité θ est quant à elle constituée par l'aptitude des arbres 202, 203 à pivoter autour de l'axe de meule A6, ce qui permet, en combinaison avec la première mobilité, de disposer le foret de la perceuse 221 dans la position souhaitée en regard du gabarit d'étalonnage 1.

La troisième mobilité z est enfin constituée par l'aptitude du train de meules et du module de finition 220 à se translater suivant l'axe de meule A6, pour rapprocher axialement le foret de la perceuse 221 du gabarit d'étalonnage 1 en vue de le percer.

Lors du perçage d'une lentille ophtalmique 100 ou du gabarit d'étalonnage 1, l'unité de pilotage 251 élabore donc trois consignes de pilotage ρ_{c}, θ_{c}, z_{c} pour piloter en combinaison les trois mobilités ρ, θ, z de la perceuse 251.

Chacune de ces trois consignes de pilotage ρ_{c}, θ_{c}, z_{c} est rectifiée à chaque perçage par un paramètre d'étalonnage ρ₀, θ₀, z₀.

De tels paramètres d'étalonnage permettent de compenser les « erreurs de dérive », c'est-à-dire les erreurs provenant de l'usure progressive des outils de finition, et les « erreurs de fabrication », c'est-à-dire les erreurs provenant du fait que la meuleuse n'est jamais rigoureusement identique aux plans théoriques.

Ici, chaque paramètre d'étalonnage ρ₀, θ₀, z₀ est formé par une constante qui est ajoutée à la consigne de pilotage correspondante.

Lors de l'étalonnage de la position de la perceuse 221, il s'agit alors de déterminer les paramètres d'étalonnage ρ₀, θ₀, z₀ des trois consignes de pilotage ρ_{c}, θ_{c}, z_{c}.

Ces trois paramètres d'étalonnage ρ₀, θ₀, z₀ sont ici déterminés successivement, à l'issue de trois étapes successives d'usinage des motifs de forme 30 du gabarit d'étalonnage 1.

Plus précisément, au cours d'une première étape, l'unité de pilotage 251 procède à la détermination du paramètre d'étalonnage z₀ de la consigne de pilotage z_{c} de la troisième mobilité z de la perceuse 221.

Elle fixe tout d'abord ce paramètre d'étalonnage z₀ à une première valeur prédéterminée qui est mémorisée dans sa mémoire morte.

L'unité de pilotage 251 commande ensuite en combinaison l'escamotage ESC du module de finition 220 et le pivotement des deux arbres 202, 203 autour de l'axe de blocage A7 afin de placer l'extrémité libre du foret de perçage de la perceuse 221 sensiblement en vis-à-vis du centre de la première marque de centrage 31 de l'un des secteurs angulaires du gabarit d'étalonnage 1, celui identifié par la valeur 0.

L'unité de pilotage 251 commande alors la rotation du foret de perçage de la perceuse 221 puis la mobilité de translation TRA du module de finition 220 pour rapprocher le foret de perçage de la perceuse 221 du gabarit d'étalonnage 1, jusqu'à une position prédéterminée dans laquelle le foret de perçage est sensé percer le gabarit d'étalonnage 1 sur une profondeur de l'ordre du dixième de millimètre.

L'opération est ensuite répétée pour percer la première marque de centrage 31 de chacun des autres secteurs angulaires du gabarit d'étalonnage 1.

L'unité de pilotage 251 commande à cet effet successivement :
- la mobilité de translation TRA du module de finition 220 pour écarter le foret de perçage du gabarit d'étalonnage 1,
- le pivotement des deux arbres 202, 203 autour de l'axe de blocage A7 pour placer l'extrémité libre du foret de perçage sensiblement en vis-à-vis du centre de la première marque de centrage 31 du secteur angulaire suivant,
- la mobilité de translation TRA du module de finition 220 pour rapprocher le foret de perçage du gabarit d'étalonnage 1, jusqu'à une position prédéterminée dans laquelle le foret de perçage est sensé percer le gabarit d'étalonnage 1 sur une profondeur de l'ordre du dixième de millimètre.

L'unité de pilotage 251 modifie toutefois avant chaque perçage la valeur du paramètre d'étalonnage z₀, en l'incrémentant d'une constante prédéterminée. Cette constante est ici supérieure à la profondeur sur laquelle le gabarit d'étalonnage 1 est sensé être percé.

L'opération de perçage est ainsi réalisée de manière homologue mais non strictement identique sur chaque motif de forme 30.

A l'issue de ces opérations de perçage, l'usager inspecte visuellement le gabarit d'étalonnage 1 puis détermine quel identifiant visuel 40 est associé à la marque de centrage 31 percée sur une profondeur de l'ordre du dixième de millimètre. Pour cela, l'usager détermine le numéro de l'identifiant visuel 40 du secteur angulaire sur lequel apparaît la première trace de perçage. Tel que représenté sur la figure 3, il s'agit ici du numéro 4.

L'unité de pilotage 251 commande alors l'affichage sur l'écran d'affichage 253 d'un menu permettant la saisie de la valeur de l'un quelconque des identifiants visuels 40. Ainsi, l'usager peut saisir à l'aide du clavier 254 le numéro de l'identifiant visuel du secteur angulaire sélectionné.

Enfin, l'unité de pilotage 251 affecte au paramètre d'étalonnage z₀ la valeur du paramètre d'étalonnage utilisé lors du perçage de la première marque de centrage 31 du secteur angulaire sélectionné.

De cette manière, l'unité de pilotage 251 s'assure que, pour les usinages postérieurs, la position axiale effective de l'extrémité libre du foret de perçage correspondra exactement à la position souhaitée.

Au cours d'une seconde étape, l'unité de pilotage 251 procède à la détermination du paramètre d'étalonnage ρ₀ de la consigne de pilotage ρ_{c} de la première mobilité p de la perceuse 221.

Elle procède pour cela de manière homologue à celle utilisée à la première étape, en fixant tout d'abord ce paramètre d'étalonnage ρ₀ à une valeur prédéterminée, puis en commandant le perçage de la seconde marque de centrage 32 de chaque secteur angulaire du gabarit d'étalonnage 1.

L'unité de pilotage 251 modifie toutefois ici avant chaque perçage la valeur du seul paramètre d'étalonnage ρ₀, en l'incrémentant d'une constante prédéterminée.

A l'issue de ces opérations de perçage, l'usager inspecte visuellement le gabarit d'étalonnage 1 puis détermine le numéro de l'identifiant visuel 40 qui est associé à la marque de centrage 32 où la perceuse a percé le gabarit d'étalonnage 1 au centre de la mire 32A. Tel que représenté sur la figure 3, il s'agit ici du numéro 4.

Alors, l'usager saisit à l'aide du clavier 254 le numéro de l'identifiant visuel 40 du secteur angulaire sélectionné, et l'unité de pilotage affecte au paramètre d'étalonnage ρ₀ la valeur du paramètre utilisée lors du perçage de la seconde marque de centrage 32 du secteur angulaire sélectionné.

Au cours d'une troisième étape, l'unité de pilotage 251 procède à la détermination du paramètre d'étalonnage θ₀ de la consigne de pilotage θ_{c} de la seconde mobilité θ de la perceuse 221.

Elle procède pour cela de manière homologue à celles utilisées aux première et seconde étapes, en fixant tout d'abord ce paramètre d'étalonnage θ₀ à une valeur prédéterminée, puis en commandant le perçage de la troisième marque de centrage 33 de chaque secteur angulaire du gabarit d'étalonnage 1.

L'unité de pilotage 251 modifie toutefois ici avant chaque perçage la valeur du seul paramètre d'étalonnage θ₀, en l'incrémentant d'une constante prédéterminée.

A l'issue de ces opérations de perçage, l'usager inspecte visuellement le gabarit d'étalonnage 1 puis détermine le numéro de l'identifiant visuel 40 qui est associé à la marque de centrage 33 où la perceuse a percé le gabarit d'étalonnage 1 au centre de la mire 33A. Tel que représenté sur la figure 3, il s'agit ici du numéro 4.

Alors, l'usager saisit à l'aide du clavier 254 le numéro de l'identifiant visuel 40 du secteur angulaire sélectionné, et l'unité de pilotage 251 affecte au paramètre d'étalonnage θ₀ la valeur du paramètre utilisée lors du perçage de la troisième marque de centrage 33 du secteur angulaire sélectionné.

Ainsi, l'ensemble des mobilités ρ, θ, z de la perceuse 221 sont parfaitement étalonnées.

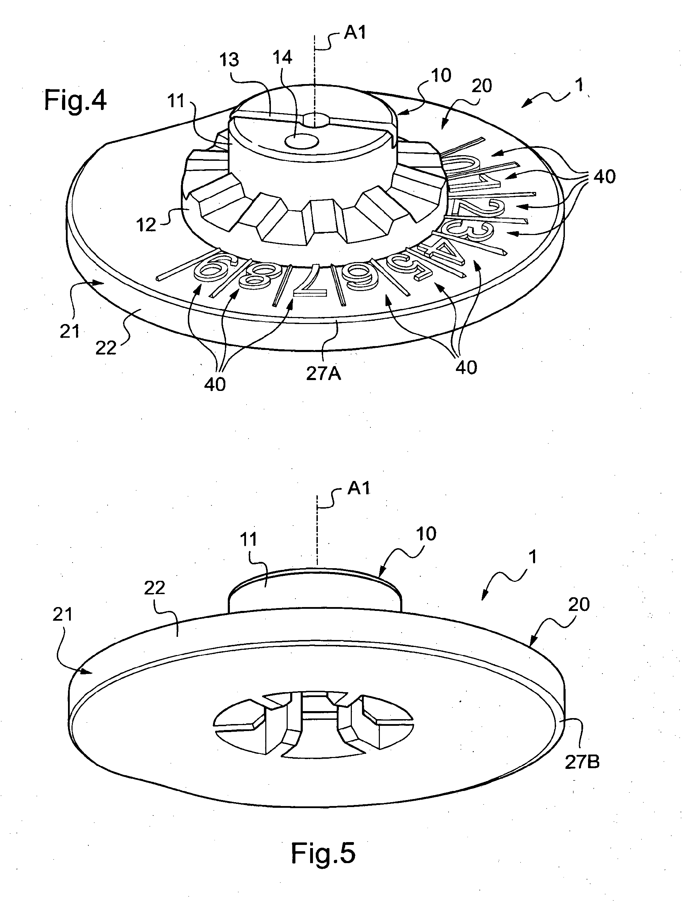

Il est ensuite procédé à l'étalonnage de la position de la meule de chanfreinage 223 relativement aux arbres 202, 203 (voir figures 4 et 5).

Il s'agit ici plus précisément de déterminer la profondeur de passe préférée par l'usager pour chanfreiner chacune des deux arêtes d'une lentille ophtalmique.

La meule de chanfreinage 223 est alors considérée comme possédant trois mobilités p', θ', z' par rapport aux arbres 202, 203, qui correspondent aux mobilités ρ, θ, z de la perceuse.

Lors du chanfreinage d'une lentille ou du gabarit d'étalonnage 1, l'unité de pilotage 251 élabore trois consignes de pilotage ρ'_{c}, θ'_{c}, z'_{c} pour piloter en combinaison les trois mobilités de la meule de chanfreinage 223.

Ici, une seule de ces consignes de pilotage ρ'_{c} est rectifiée par un paramètre d'étalonnage ρ'₀. En effet, la modification de ce seul paramètre d'étalonnage ρ'₀ suffit à modifier la profondeur de passe de la meule de chanfreinage 223.

Avant de chercher à déterminer la valeur idéale de ce paramètre d'étalonnage ρ'₀, l'unité de pilotage 251 commande l'ébauche (par la meule d'ébauche 210) de l'ensemble du contour du gabarit d'étalonnage 1 de manière à réduire son diamètre et à faire disparaître les motifs de forme 40 et les renfoncements 23. Le gabarit d'étalonnage 1 présente ainsi une tranche sensiblement cylindrique de révolution autour de l'axe principal A1.

Puis, l'unité de pilotage 251 commande la translation du module de finition 220 suivant l'axe de meule A6 de manière à placer une première extrémité conique de la meule de chanfreinage 223 à hauteur de l'arête avant de la tranche 21 du gabarit d'étalonnage 1. Elle commande également le pivotement des deux arbres 202, 203 autour de l'axe de blocage A7 pour placer le premier secteur angulaire du gabarit d'étalonnage 1 en regard de la meule de chanfreinage 223.

L'unité de pilotage 251 fixe alors le paramètre d'étalonnage ρ'₀ à une première valeur prédéterminée qui est mémorisée dans sa mémoire morte.

Elle commande ensuite l'escamotage ESC et le transfert TRA du module de finition 220 pour commencer à chanfreiner l'arête avant de la tranche 21 de la lentille ophtalmique. Elle commande également le pivotement des deux arbres 202, 203 autour de l'axe de blocage A7 pour prolonger ce chanfrein le long de cette première arête. Toutefois, à chaque fois que la meule de charifreinage 223 passe d'un secteur angulaire du gabarit d'étalonnage 1 à l'autre, l'unité de pilotage 251 incrémente la valeur du paramètre d'étalonnage ρ'₀ d'une constante prédéterminée.

Le gabarit d'étalonnage 1 présente ainsi un chanfrein 27A de profondeur variable le long de son contour.

A l'issue de cette opération de chanfreinage, l'usager inspecte visuellement le gabarit d'étalonnage 1 puis détermine le secteur angulaire dans lequel le chanfrein 27A présente une profondeur qui lui convient.

Alors, l'usager saisit à l'aide du clavier 254 le numéro de l'identifiant visuel 40 du secteur angulaire sélectionné, et l'unité de pilotage 251 affecte au paramètre d'étalonnage ρ'₀ la valeur du paramètre utilisée lors du chanfreinage du secteur angulaire sélectionné.

Il est alors procédé de la même manière, en ébauchant une nouvelle fois le gabarit d'étalonnage afin de faire disparaître le premier chanfrein 27A, puis en réalisant un second chanfrein 27B de taille variable le long de l'arête arrière du gabarit d'étalonnage 1 à l'aide de la seconde extrémité conique de la meule de chanfreinage 223.

Ce second chanfrein permet ainsi de déterminer une nouvelle valeur du paramètre d'étalonnage ρ'₀, identique ou distincte de la première valeur trouvée.

Puis, lors de l'usinage ultérieur de lentilles ophtalmiques, la valeur utilisée pour le paramètre d'étalonnage ρ'₀ sera différente selon que le chanfreinage sera réalisé sur l'arête avant ou arrière de la lentille.

Il est enfin procédé à l'étalonnage de la position de la meule de rainage 222 relativement aux arbres 202, 203 (voir figures 6 et 7).

Il s'agit ici plus précisément, d'une part, de déterminer la profondeur de passe préférée par l'usager pour rainer une lentille ophtalmique, et, d'autre part, de contrôler la position axiale (le long de l'axe de meule A6) de la meule de rainage 222 par rapport aux bras 202, 203.

La meule de rainage 222 est alors considérée comme possédant trois mobilités p", θ", z", qui correspondent aux mobilités ρ, θ, z de la perceuse 221.

Lors du rainage d'une lentille ou du gabarit d'étalonnage 1, l'unité de pilotage 251 élabore alors trois consignes de pilotage ρ"_{c}, θ"_{c}, z"_{c} pour piloter en combinaison les trois mobilités de la meule de rainage 222.

Ici, seules deux de ces consignes de pilotage ρ"_{c}, z"_{c} sont rectifiées par des paramètres d'étalonnage notés ρ"₀, z"₀. En effet, la modification de ces seuls paramètres d'étalonnage ρ"₀, z"₀ suffit à modifier la profondeur de passe et à corriger la position axiale de la meule de rainage 222 par rapport aux bras 202, 203.

Pour cela, au cours d'une première étape, l'unité de pilotage 251 commande l'ébauche de l'ensemble du contour du gabarit d'étalonnage 1 de manière à faire disparaître le second chanfrein 27B réalisé sur l'arête arrière du gabarit d'étalonnage 1, de sorte que sa tranche 21 soit à nouveau sensiblement cylindrique de révolution autour de l'axe principal A1.

Elle commande ensuite la translation du module de finition 220 suivant l'axe de meule A6 de manière à placer la meule de rainage 222 sensiblement à mi-hauteur de la tranche 21 du gabarit d'étalonnage 1. Elle commande également la mobilité de pivotement des arbres 202, 203 pour placer le premier secteur angulaire du gabarit d'étalonnage 1 en regard de la meule de rainage 222.

Puis, l'unité de pilotage 251 fixe le paramètre d'étalonnage ρ"₀ à une première valeur prédéterminée qui est mémorisée dans sa mémoire morte.

L'unité de pilotage 251 commande ensuite la mise en rotation de la meule de rainage 222 autour de son axe, puis l'escamotage ESC du module de finition 220 dans une position dans laquelle la meule de rainage 222 est sensée réaliser une rainure 28A de profondeur donnée dans la tranche 21 du gabarit d'étalonnage 1.

L'opération est ensuite répétée pour usiner d'autres rainures dans chacun des autres secteurs angulaires du gabarit d'étalonnage 1.

L'unité de pilotage 251 modifie toutefois avant chaque rainage la valeur du paramètre d'étalonnage ρ"₀, en l'incrémentant d'une constante prédéterminée.

A l'issue de cette opération de rainage, l'usager inspecte visuellement le gabarit d'étalonnage 1 puis détermine le numéro de l'identifiant visuel 40 du secteur angulaire où la rainure 28A présente une profondeur qui a sa préférence.

Alors, l'usager saisit à l'aide du clavier 254 le numéro de l'identifiant visuel 40 du secteur angulaire sélectionné, et l'unité de pilotage 251 affecte au paramètre d'étalonnage ρ"₀ la valeur du paramètre utilisée lors du rainage du secteur angulaire sélectionné.

Au cours d'une seconde étape, l'unité de pilotage 251 procède à la détermination du paramètre d'étalonnage z"₀

Elle procède pour cela de manière homologue à celle utilisée à la première étape, en fixant tout d'abord ce paramètre d'étalonnage z"₀ à une valeur prédéterminée, en ébauchant une nouvelle fois le gabarit d'étalonnage 1 pour faire disparaître les rainures 28A, puis en commandant l'usinage de dix nouvelles rainures 28B dans la tranche 21 du gabarit d'étalonnage 1 en chacun de ses dix secteurs angulaires.

L'unité de pilotage 251 modifie toutefois ici avant chaque usinage la valeur du seul paramètre d'étalonnage z"₀, en l'incrémentant d'une constante prédéterminée.

A l'issue de ces opérations de rainage, les rainures 28B présentent ainsi des hauteurs différentes le long de l'axe principal A1 du gabarit d'étalonnage 1.

L'usager inspecte alors visuellement le gabarit d'étalonnage 1 puis détermine le numéro de l'identifiant visuel 40 situé à hauteur de la rainure 28B la mieux centrée sur la tranche du gabarit.

Alors, l'usager saisit à l'aide du clavier 254 le numéro de cet identifiant visuel 40, et l'unité de pilotage affecte au paramètre d'étalonnage z"₀ la valeur du paramètre utilisée lors du rainage du secteur angulaire sélectionné.

Par conséquent, une fois ces deux étapes mises en oeuvre, deux des trois mobilités p", z" de la meule de rainage 222 sont parfaitement étalonnées.

Enfin, l'unité de pilotage 251 procède à une opération de contrôle final des paramètres d'usinage ρ₀, θ₀, z₀, ρ'₀, ρ"₀, z"₀ choisis.

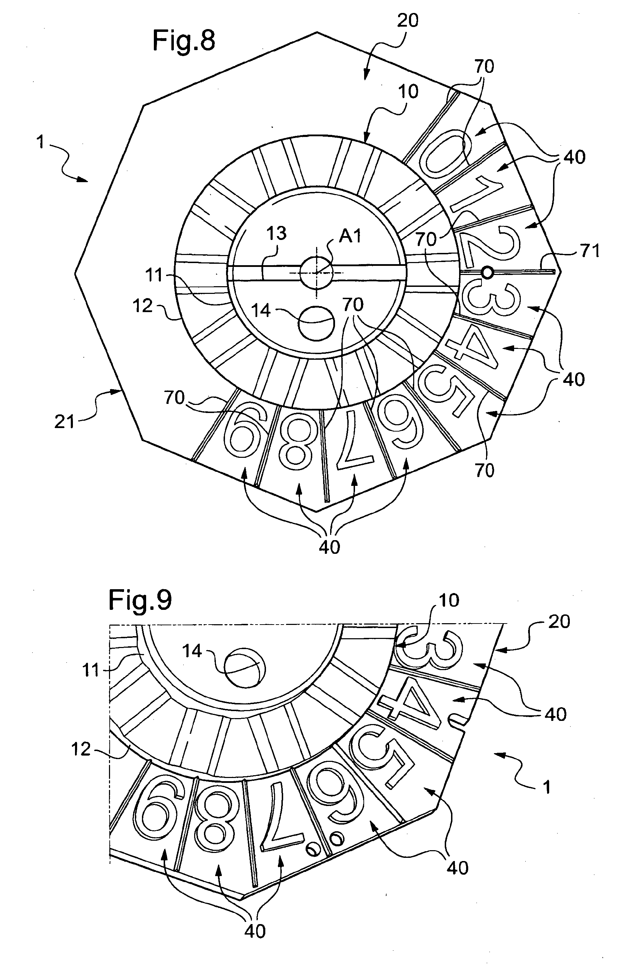

Ici, tel que représenté sur la figure 8, ce contrôle final consiste en un biseautage de la tranche 21 du gabarit d'étalonnage 1 selon un contour octogonal dont l'un des sommets est sensé coïncider avec l'une des lignes de séparation 71 du gabarit d'étalonnage 1, et en un perçage de ce gabarit d'étalonnage 1 sur cette même ligne de séparation 71.

L'usager inspecte alors visuellement le gabarit d'étalonnage 1 en contrôlant que la ligne de séparation 71 qui est percée coïncide effectivement avec l'un des sommets de l'octogone.

Puis, si tel est le cas, l'usager valide l'étalonnage en confirmant, à l'aide du clavier 254, les valeurs choisies pour les paramètres d'usinage po, θ₀, z₀, ρ'₀, ρ"₀, z"₀.

En revanche, si tel n'est pas le cas, l'usager peut soit procéder à un nouvel étalonnage de la meuleuse 200 à l'aide d'un nouveau gabarit d'étalonnage 1, soit appeler un technicien expérimenté.

Une fois l'étalonnage validé par l'usager, l'unité de pilotage 251 consigne l'ensemble des valeurs affectées aux différents paramètre d'étalonnage ρ₀, θ₀, z₀, ρ'₀, ρ"₀, z"₀, en usinant une dernière fois le gabarit d'étalonnage 1 (voir figure 9).

Grâce à cet usinage, le gabarit d'étalonnage 1 pourra faire office de procès-verbal de l'étalonnage, puisqu'il portera des marques dont les formes et/ou positions indiqueront les valeurs affectées aux différents paramètre d'étalonnage. Ce gabarit d'étalonnage 1 pourra donc être conservé par l'usager de manière qu'en cas de problème, un technicien puisse avoir facilement accès aux valeurs de ces paramètres d'étalonnage.

En l'espèce, pour mémoriser les valeurs des paramètres d'étalonnage ρ₀, θ₀, z₀ des trois consignes de pilotage ρ_{c}, θ_{c}, z_{c} de la perceuse 221, l'unité de pilotage 251 commande l'usinage :
- d'une encoche sur le secteur angulaire sélectionné lors de l'étalonnage de la première mobilité p de la perceuse 221 ;
- d'un trou débouchant sur le secteur angulaire sélectionné lors de l'étalonnage de la seconde mobilité θ de la perceuse 221 ; et
- d'un trou non débouchant sur le secteur angulaire sélectionné lors de l'étalonnage de la troisième mobilité z de la perceuse 221.

Préférentiellement, il réalise ensuite d'autres usinages sur le gabarit d'étalonnage 1 pour y indiquer les valeurs des autres paramètres d'étalonnage ρ'₀, ρ"₀, z"₀.

La présente invention n'est nullement limitée au mode de réalisation décrit et représenté, mais l'homme du métier saura y apporter toute variante conforme aux revendications annexées.

En particulier, on pourra prévoir que les motifs de forme (30) du gabarit d'étalonnage présentent des formes et/ou tailles différentes. A titre d'exemple, on pourra prévoir que les mires des secondes marques de centrage (32) présentent des formes d'arcs de cercle de diamètres différents.

On pourra par ailleurs prévoir que les motifs de forme (30) et les identifiants visuels (40) ne soient pas répartis sur des secteurs angulaires du gabarit d'étalonnage, mais qu'ils soient répartis autrement, par exemple dans une grille à 3 lignes et 3 colonnes.

On pourra enfin prévoir que le support de la perceuse soit monté pivotant sur le module de finition de la meuleuse autour d'un axe orthogonal à l'axe de référence et à l'axe du foret. Grâce à cette mobilité, le foret pourra percer la lentille suivant un axe de perçage orthogonal au plan tangent à la face avant de la lentille au point de perçage.

Dans cette variante, l'étalonnage de la perceuse pourra être réalisé en bloquant le support de la perceuse par rapport au module de finition avec un angle d'orientation prédéterminé. Il pourra également être réalisé deux fois, en bloquant le support de la perceuse par rapport au module de finition avec deux angles différents.

## Revendications

1. Gabarit d'étalonnage (1) pour étalonner un dispositif d'usinage (200) qui est équipé de moyens de blocage (202, 203) et de moyens d'usinage (210, 211, 221, 222, 223) d'une lentille ophtalmique (100), comportant une partie de fixation (10) adaptée à être fixée auxdits moyens de blocage (202, 203), et une partie d'étalonnage (20) ménagée autour de ladite partie de fixation (10),
**caractérisé en ce que** ladite partie d'étalonnage (20) est réalisée dans un matériau adapté à être usiné par lesdits moyens d'usinage (210, 211, 221, 222, 223) et présente, d'une part, une pluralité de motifs de forme (30), et, d'autre part, une pluralité d'identifiants visuels (40) chacun visuellement associé à l'un desdits motifs de forme (30).

2. Gabarit d'étalonnage (1) selon la revendication 1, dans lequel lesdits motifs de forme (30) présentent tous des formes identiques.

3. Gabarit d'étalonnage (1) selon l'une des revendications 1 et 2, dans lequel lesdits motifs de forme (30) sont répartis à intervalles réguliers sur ladite partie d'étalonnage (20) autour de ladite partie de fixation (10).

4. Gabarit d'étalonnage (1) selon l'une des revendications 1 à 3, dans lequel chaque motif de forme (30) et chaque identifiant visuel (40) associé s'étend autour de ladite partie de fixation (10), sur un secteur angulaire donné d'une face de ladite partie d'étalonnage (20).

5. Gabarit d'étalonnage (1) selon l'une des revendications 1 à 4, dans lequel chaque motifs de forme (30) comporte plusieurs marques de centrage (31, 32, 33) distinctes.

6. Gabarit d'étalonnage (1) selon la revendication 5, dans lequel l'une au moins desdites marques de centrage (31, 32, 33) comporte une mire (32A, 33A).

7. Gabarit d'étalonnage (1) selon la revendication 6, dans lequel la mire (32A) de l'une desdites marques de centrage (32) comporte un arc de cercle centré autour de ladite partie de fixation (10), et la mire (33A) d'une autre desdites marques de centrage (33) comporte un trait radial par rapport à ladite partie de fixation (10).

8. Gabarit d'étalonnage (1) selon l'une des revendications 1 à 7, dans lequel lesdits identifiants visuels (40) sont formés par des chiffres et/ou des lettres distinctes.

9. Gabarit d'étalonnage (1) selon l'une des revendications 1 à 8, dans lequel ladite partie d'étalonnage (20) présente des faces avant et arrière et comporte un ergot (60) en saillie de chacune de ses deux faces avant et arrière.

10. Dispositif d'usinage (200) comportant :
- des moyens de blocage (202, 203) d'une lentille ophtalmique (100),
- des moyens d'usinage (210, 211, 221, 222, 223) de ladite lentille ophtalmique (100), qui comprennent au moins l'un des outils suivant: une perceuse (221), une meule de rainage (222), un outil de chanfreinage (223),
- une unité de pilotage (251) de la position desdits moyens d'usinage (210, 211, 221, 222, 223) relativement auxdits moyens de blocage (202, 203),
- des moyens d'affichage (253) d'informations, pilotés par ladite unité de pilotage (251), et
- des moyens de saisie (252) qui sont accessibles à l'usager pour lui permettre de saisir une donnée et qui sont adaptés à transmettre cette donnée à ladite unité de pilotage (251),
**caractérisé en ce que**, pour l'étalonnage de la position dudit outil relativement auxdits moyens de blocage (202, 203) à l'aide d'un gabarit d'étalonnage (1) tel que revendiqué dans l'une des revendications 1 à 9 :
- ladite unité de pilotage (251) est programmée pour piloter l'affichage sur lesdits moyens d'affichage (253) des identifiants visuels (40) qui apparaissent sur ledit gabarit d'étalonnage (1),
- lesdits moyens de saisie (252) permettent de sélectionner l'un des identifiants affichés, et
- ladite unité de pilotage (251) est adaptée à étalonner la position dudit outil relativement auxdits moyens de blocage (202, 203) en fonction de l'identifiant sélectionné.

11. Procédé d'étalonnage de la position d'un outil d'un dispositif d'usinage (200) selon la revendication 10 à l'aide d'un gabarit d'étalonnage (1) selon la revendication 1, ledit outil présentant au moins une mobilité (p, θ, z) pilotée par l'unité de pilotage (251) du dispositif d'usinage (200) en fonction d'une consigne de pilotage (ρ_{c}, θ_{c}, z_{c}) rectifiée par un paramètre d'étalonnage (po, θ₀, z₀), comportant des étapes au cours desquelles :
a) la partie de fixation (10) du gabarit d'étalonnage (1) est fixée sur les moyens de blocage (203, 203) du dispositif d'usinage (200),
b) la partie d'étalonnage (20) du gabarit d'étalonnage (1) est usinée par l'outil du dispositif d'usinage (200) en chacun de ses motifs de forme (30), suivant des consignes de pilotage (ρ_{c}, θ_{c}, z_{c}) homologues dans lesquelles le paramètre d'étalonnage (po, θ₀, z₀) est modifié en chacun des motifs de forme (30),
c) l'un des motifs de forme (30) usinés, celui où l'usinage réalisé, est considéré comme optimal, est sélectionné visuellement par un usager,
d) l'identifiant visuel (40) associé au motif de forme (30) sélectionné est lu par l'usager,
e) l'identifiant visuel (40) lu est saisi par l'usager sur les moyens de saisie (252) du dispositif d'usinage (200), et
f) la valeur utilisée pour usiner le motif de forme (30) sélectionné est affectée au paramètre d'étalonnage (po, θ₀, z₀).

12. Procédé d'étalonnage selon la revendication 11, dans lequel, ledit outil présentant au moins une seconde mobilité (p, θ, z) pilotée par l'unité de pilotage (251) du dispositif d'usinage (200) en fonction d'une consigne de pilotage (ρ_{c}, θ_{c}, z_{c}) rectifiée par un second paramètre d'étalonnage (ρ₀, θ₀, z₀), les étapes b) à f) sont répétées en usinant la partie d'étalonnage (20) du gabarit d'étalonnage (1) en chacun de ses motifs de forme (30) suivant des consignes de pilotage (ρ_{c}, θ_{c}, z_{c}) homologues dans lesquelles le second paramètre d'étalonnage (ρ₀, θ₀, z₀) est modifié en chacun des motifs de forme (30).

13. Procédé d'étalonnage selon l'une des revendications 11 et 12, dans lequel, ledit dispositif d'usinage (200) comportant un autre outil présentant au moins une mobilité (p, θ, z) pilotée par l'unité de pilotage (251) en fonction d'une autre consigne de pilotage (ρ_{c}, θ_{c}, z_{c}) rectifiée par un autre paramètre d'étalonnage (ρ₀, θ₀, z₀), les étapes b) à f) sont répétées en usinant la partie d'étalonnage (20) du gabarit d'étalonnage (1) en chacun de ses motifs de forme (30) suivant des consignes de pilotage (ρ_{c}, θ_{c}, z_{c}) homologues dans lesquelles ledit autre paramètre d'étalonnage (ρ₀, θ₀, z₀) est modifié en chacun des motifs de forme (30).

14. Procédé d'étalonnage selon l'une des revendications 11 à 13, comportant une étape g) de consignation de la valeur affectée au paramètre d'étalonnage (ρ₀, θ₀, z₀), au cours de laquelle le gabarit d'étalonnage (1) est usiné en une position et/ou selon une forme caractéristique de ladite valeur affectée.

15. Procédé d'étalonnage selon la revendication 14, dans lequel, à l'étape g), la position et/ou la forme de l'usinage est caractéristique du paramètre d'étalonnage (ρ₀, θ₀, z₀) étalonné.

16. Procédé d'étalonnage selon l'une des revendications 11 à 15, comportant une étape g') de contrôle final du gabarit d'étalonnage (1), au cours de laquelle la tranche (20) du gabarit d'étalonnage (1) est usinée suivant une forme prédéterminée, permettant de contrôler visuellement que le paramètre d'étalonnage (ρ₀, θ₀, z₀) est approprié.

17. Procédé d'étalonnage selon la revendication 16, dans lequel, à l'étape g'), ladite forme prédéterminée forme au moins un angle sur la tranche (20) du gabarit d'étalonnage (1) qui, lorsque le paramètre d'étalonnage (ρ₀, θ₀, z₀) est approprié, est aligné avec un repère (71) du gabarit d'étalonnage (1).

## Patentansprüche

1. Kalibrierschablone (1) zum Kalibrieren einer Bearbeitungsvorrichtung (200), die mit Blockiereinrichtungen (202, 203) und mit Bearbeitungseinrichtungen (210, 211, 221, 222, 223) einer ophthalmischen Linse (100) ausgestattet ist, die einen Befestigungsteil (10), der geeignet ist, um an den Blockiereinrichtungen (202, 203) befestigt zu werden, und einen Kalibrierteil (20) aufweist, der um den Befestigungsteil (10) herum angeordnet ist,
**dadurch gekennzeichnet, dass** der Kalibrierteil (20) aus einem Material hergestellt wird, das geeignet ist, um von den Bearbeitungseinrichtungen (210, 211, 221, 222, 223) bearbeitet zu werden, und einerseits eine Vielzahl von Formmustern (30) und andererseits eine Vielzahl von Sichtkennungen (40) aufweist, die jeweils visuell einem der Formmuster (30) zugeordnet sind.

2. Kalibrierschablone (1) nach Anspruch 1, wobei die Formmuster (30) alle gleiche Formen aufweisen.

3. Kalibrierschablone (1) nach einem der Ansprüche 1 und 2, wobei die Formmuster (30) in gleichmäßigen Abständen auf dem Kalibrierteil (20) um den Befestigungsteil (10) herum verteilt sind.

4. Kalibrierschablone (1) nach einem der Ansprüche 1 bis 3, wobei jedes Formmuster (30) und jede zugeordnete Sichtkennung (40) sich um den Befestigungsteil (10) herum über einen gegebenen Winkelsektor einer Seite des Kalibrierteils (20) erstreckt.

5. Kalibrierschablone (1) nach einem der Ansprüche 1 bis 4, wobei jedes Formmuster (30) mehrere unterschiedliche Zentriermarkierungen (31, 32, 33) aufweist.

6. Kalibrierschablone (1) nach Anspruch 5, wobei mindestens eine der Zentriermarkierungen (31, 32, 33) eine Messlatte (32A, 33A) aufweist.

7. Kalibrierschablone (1) nach Anspruch 6, wobei die Messlatte (32A) einer der Zentriermarkierungen (32) einen um den Befestigungsteil (10) zentrierten Kreisbogen aufweist, und die Messlatte (33A) einer anderen der Zentriermarkierungen (33) einen radialen Strich bezüglich des Befestigungsteils (10) aufweist.

8. Kalibrierschablone (1) nach einem der Ansprüche 1 bis 7, wobei die Sichtkennungen (40) von unterschiedlichen Zahlen und/oder Buchstaben geformt werden.

9. Kalibrierschablone (1) nach einem der Ansprüche 1 bis 8, wobei der Kalibrierteil (20) eine Vorder- und eine Rückseite hat und einen Zapfen (60) aufweist, der von jeder seiner zwei Vorder- und Rückseiten vorsteht.

10. Bearbeitungsvorrichtung (200), die Folgendes aufweist:
- Blockiereinrichtungen (202, 203) einer ophthalmischen Linse (100),
- Bearbeitungseinrichtungen (210, 211, 221, 222, 223) der ophthalmischen Linse (100), die mindestens eines der folgenden Werkzeuge enthalten: einen Bohrer (221), einen Rillenschleifer (222), ein Abfaswerkzeug (223),
- eine Steuereinheit (251) der Stellung der Bearbeitungseinrichtungen (210, 211, 221, 222, 223) bezüglich der Blockiereinrichtungen (202, 203),
- Anzeigeeinrichtungen (253) von Informationen, die von der Steuereinheit (251) gesteuert werden, und
- Eingabeeinrichtungen (252) die für den Benutzer zugänglich sind, um es ihm zu ermöglichen, einen Datenwert einzugeben, und die geeignet sind, um diesen Datenwert an die Steuereinheit (251) zu übertragen,
**dadurch gekennzeichnet, dass** für die Kalibrierung der Stellung des Werkzeugs bezüglich der Blockiereinrichtungen (202, 203) mit Hilfe einer Kalibrierschablone (1), wie in einem der Ansprüche 1 bis 9 beansprucht:
- die Steuereinheit (251) programmiert ist, um die Anzeige auf den Anzeigeeinrichtungen (253) der Sichtkennungen (40) zu steuern, die auf der Kalibrierschablone (1) erscheinen,
- die Erfassungseinrichtungen (252) es ermöglichen, eine der angezeigten Kennungen auszuwählen, und
- die Steuereinheit (251) geeignet ist, um die Stellung des Werkzeugs bezüglich der Blockiereinrichtungen (202, 203) abhängig von der ausgewählten Kennung zu kalibrieren.

11. Verfahren zur Kalibrierung der Stellung eines Werkzeugs einer Bearbeitungsvorrichtung (200) nach Anspruch 10 mit Hilfe einer Kalibrierschablone (1) nach Anspruch 1, wobei das Werkzeug mindestens eine Beweglichkeit (p, θ, z) hat, die von der Steuereinheit (251) der Bearbeitungsvorrichtung (200) abhängig von einem Steuersollwert (ρ_{c}, θ_{c}, z_{c}), korrigiert durch einen Kalibrierparameter (ρ₀, θ₀, z₀), gesteuert wird, wobei das Verfahren folgende Schritte aufweist, während denen:
a) der Befestigungsteil (10) der Kalibrierschablone (1) an den Blockiereinrichtungen (202, 203) der Bearbeitungsvorrichtung (200) befestigt wird,
b) der Kalibrierteil (20) der Kalibrierschablone (1) vom Werkzeug der Bearbeitungsvorrichtung (200) in jedem seiner Formmuster (30) gemäß homologen Steuersollwerten (ρ_{c}, θ_{c}, z_{c}) bearbeitet wird, wobei der Kalibrierparameter (ρ₀, θ₀, z₀) in jedem der Formmuster (30) verändert wird,
c) eines der bearbeiteten Formmuster (30), dasjenige, bei dem die Bearbeitung als optimal angesehen wird, visuell von einem Benutzer ausgewählt wird,
d) die dem ausgewählten Formmuster (30) zugeordnete Sichtkennung (40) vom Benutzer gelesen wird,
e) die gelesene Sichtkennung (40) vom Benutzer in die Eingabeeinrichtungen (252) der Bearbeitungsvorrichtung (200) eingegeben wird, und
f) der zur Bearbeitung des ausgewählten Formmusters (30) verwendete Wert dem Kalibrierparameter (ρ₀, θ₀, z₀) zugewiesen wird.

12. Kalibrierverfahren nach Anspruch 11, wobei das Werkzeug mindestens eine zweite Beweglichkeit (p, θ, z) hat, die von der Steuereinheit (251) der Bearbeitungsvorrichtung (200) abhängig von einem Steuersollwert (ρ_{c}, θ_{c}, z_{c}), korrigiert durch einen zweiten Kalibrierparameter (ρ₀, θ₀, z₀), gesteuert wird, und die Schritte b) bis f) wiederholt werden, indem der Kalibrierteil (20) der Kalibrierschablone (1) in jedem seiner Formmuster (30) gemäß homologen Steuersollwerten (ρ_{c}, θ_{c}, z_{c}) bearbeitet wird, wobei der zweite Kalibrierparameter (ρ₀, θ₀, z₀) in jedem der Formmuster (30) verändert wird.

13. Kalibrierverfahren nach einem der Ansprüche 11 und 12, wobei die Bearbeitungsvorrichtung (200) ein weiteres Werkzeug aufweist, das mindestens eine von der Steuereinheit (251) abhängig von einem weiteren Steuersollwert (ρ_{c}, θ_{c}, z_{c}), korrigiert durch einen weiteren Kalibrierparameter (ρ₀, θ₀, z₀), gesteuerte Beweglichkeit (p, θ, z) hat, und die Schritte b) bis f) wiederholt werden, indem der Kalibrierteil (20) der Kalibrierschablone (1) in jedem seiner Formmuster (30) gemäß homologen Steuersollwerten (ρ_{c}, θ_{c}, z_{c}) bearbeitet wird, wobei der weitere Kalibrierparameter (ρ₀, θ₀, z₀) in jedem der Formmuster (30) verändert wird.

14. Kalibrierverfahren nach einem der Ansprüche 11 bis 13, das einen Schritt g) der Einstellung des dem Kalibrierparameter (ρ₀, θ₀, z₀) zugewiesenen Werts aufweist, während dessen die Kalibrierschablone (1) in einer Stellung und/oder gemäß einer charakteristischen Form des zugewiesenen Werts bearbeitet wird.

15. Kalibrierverfahren nach Anspruch 14, wobei im Schritt g) die Stellung und/oder die Form der Bearbeitung für den kalibrierten Kalibrierparameter (ρ₀, θ₀, z₀) charakteristisch ist.

16. Kalibrierverfahren nach einem der Ansprüche 11 bis 15, das einen Schritt g') der Endkontrolle der Kalibrierschablone (1) aufweist, während dessen die Schmalseite (21) der Kalibrierschablone (1) gemäß einer vorbestimmten Form bearbeitet wird, die es ermöglicht, visuell zu kontrollieren, ob der Kalibrierparameter (ρ₀, θ₀, z₀) geeignet ist.

17. Kalibrierverfahren nach Anspruch 16, wobei im Schritt g') die vorbestimmte Form mindestens einen Winkel auf der Schmalseite (21) der Kalibrierschablone (1) formt, der, wenn der Kalibrierparameter (ρ₀, θ₀, z₀) geeignet ist, mit einer Markierung (71) der Kalibrierschablone (1) ausgerichtet ist.

## Claims

1. A calibration template (1) for calibrating a machining device (200) that has blocking means (202, 203) for blocking an ophthalmic lens (100), and machining means (210, 211, 221, 222, 223) for machining the ophthalmic lens (100), the template comprising a fastener portion (10) suitable for being fastened to said blocking means (202, 203) and a calibration portion (20) arranged around said fastener portion (10), the template being **characterized in that** said calibration portion (20) is made out of a material that is suitable for being machined by said machining means (210, 211, 221, 222, 223), and presents firstly a plurality of shape patterns (30), and secondly a plurality of visual identifiers (40), each visually associated with one of said shape patterns (30).

2. A calibration template (1) according to claim 1, wherein said shape patterns (30) are all of identical shape.

3. A calibration template (1) according to claim 1 or claim 2, wherein said shape patterns (30) are distributed at regular intervals over said calibration portion (20) around said fastener portion (10).

4. A calibration template (1) according to any one of claims 1 to 3, wherein each shape pattern (30) and each associated visual identifier (40) extends around said fastener portion (10) over a given angular sector of one face of said calibration portion (20).

5. A calibration template (1) according to any one of claims 1 to 4, wherein each shape pattern (30) comprises a plurality of distinct centering marks (31, 32, 33).

6. A calibration template (1) according to claim 5, wherein at least one of said centering marks (31, 32, 33) includes a target (32A, 33A).

7. A calibration template (1) according to claim 6, wherein the target (32A) of one of said centering marks (32) comprises a circular arc centered about said fastener portion (10), and the target (33A) of another of said centering marks (33) comprises a mark that is radial relative to said fastener portion (10).

8. A calibration template (1) according to any one of claims 1 to 7, wherein said visual identifiers (40) are constituted by distinct digits and/or letters.

9. A calibration template (1) according to any one of claims 1 to 8, wherein said calibration portion (20) presents front and rear faces and includes a peg (60) projecting from each of its front and rear faces.

10. A machining device (200) comprising:
· blocking means (202, 203) for blocking an ophthalmic lens (100);
· machining means (210, 211, 221, 222, 223) for machining said ophthalmic lens (100), the machining means comprising at least one of the following tools: a drill (221), a grooving grindwheel (222), and a chamfering tool (223);
· a control unit (251) for controlling the positions of said machining means (210, 211, 221, 222, 223) relative to said blocking means (202, 203);
· information display means (253) controlled by said control unit (251); and
· input means (252) accessible to the user to enable the user to input data and adapted to transmit said data to said control unit (251);
the device being **characterized in that**, in order to calibrate the position of said tool relative to said blocking means (202, 203) with the help of a calibration template (1) as claimed in any one of claims 1 to 9:
· said control unit (251) is programmed to display the visual identifiers (40) that appear on said calibration template (1) on said display means (253);
· said input means (252) enable one of the displayed identifiers to be selected; and
· said control unit (251) is adapted to calibrate the position of said tool relative to said blocking means (202, 203) as a function of the selected identifier.

11. A method of calibrating the position of a tool of a machining device (200) according to claim 10 with the help of a calibration template (1) according to claim 1, said tool presenting at least one freedom of movement (p, θ, z) controlled by the control unit (251) of the machining device (200) as a function of a control setpoint (ρ_{c}, θ_{c}, z_{c}) corrected by a calibration parameter (ρ₀, θ₀, z₀), the method including the following steps:
a) fastening the fastener portion (10) of the calibration template (1) on the blocking means (202, 203) of the machining device (200);
b) machining the calibration portion (20) of the calibration template (1) by using the tool of the machining device (200) on each of the shape patterns (30) of the calibration template, in application of control setpoints (ρ_{c}, θ_{c}, z_{c}) that are similar but in which the calibration parameter (ρ₀, θ₀, z₀) is modified in each of the shape patterns (30);
c) a user visually selecting one of the machined shape patterns (30), namely the pattern where the machining that has been performed is considered as being the best;
d) the user reading the visual identifier (40) associated with the selected shape pattern (30);
e) the user using the input means (252) of the machining device (200) to input the visual identifier (40) that has been read; and
f) allocating the value that was used for machining the selected shape pattern (30) as the calibration parameter (ρ₀, θ₀, z₀).

12. A calibration method according to claim 11, wherein said tool presents at least one second freedom of movement (p, θ, z) controlled by the control unit (251) of the machining device (200) as a function of a control setpoint (ρ_{c}, θ_{c}, z_{c}) corrected by a second calibration parameter (ρ₀, θ₀, z₀), and steps b) to f) are repeated by machining the calibration portion (20) of the calibration template (1) in each of its shape patterns (30) using control setpoints (ρ_{c}, θ_{c}, z_{c}) that are similar but in which the second calibration parameter (ρ₀, θ₀, z₀) is modified in each of the shape patterns (30).

13. A calibration method according to claim 11 or claim 12, wherein said machining device (200) includes another tool presenting at least one freedom of movement (p, θ, z) controlled by the control unit (251) as a function of another control setpoint (ρ_{c}, θ_{c}, z_{c}) corrected by another calibration parameter (ρ₀, θ₀, z₀), and steps b) to f) are repeated by machining the calibration portion (20) of the calibration template (1) in each of its shape patterns (30) using control setpoints (ρ_{c}, θ_{c}, z_{c}) that are similar but in which said other calibration parameter (ρ₀, θ₀, z₀) is modified in each of the shape patterns (30).

14. A calibration method according to any one of claims 11 to 13, including a step g) of logging the value allocated to the calibration parameter (ρ₀, θ₀, z₀), in which step the calibration template (1) is machined in a position and/or with a shape that is characteristic of said allocated value.

15. A calibration method according to claim 14, wherein, in step g), the position and/or the shape of the machining is characteristic of the calibrated calibration parameter (ρ₀, θ₀, z₀).

16. A calibration method according to any one of claims 11 to 15, including a step g') of finally checking the calibration template (1), in which step the edge face (21) of the calibration template (1) is machined with a predetermined shape, making it possible to check visually that the calibration parameter (ρ₀, θ₀, z₀) is appropriate.

17. A calibration method according to claim 16, wherein, in step g'), said predetermined shape forms at least one angle on the edge face (21) of the calibration template (1) that, providing the first calibration parameter (ρ₀, θ₀, z₀) is appropriate, is in alignment with a mark (71) of the calibration template (1).
